# EUROPEAN PATENT SPECIFICATION

(11) **EP 2 202 921 B1**
(45) Date of publication and mention of the grant of the patent: **27.03.2013**
(21) Application number: 08851803.0
(22) Date of filing: 28.09.2008
(51) Int. Cl.: G06F 11/20

(54) **A DATA STORAGE METHOD, A MANAGEMENT SERVER, A STORAGE EQUIPMENT AND SYSTEM**
DATENSPEICHERUNGSVERFAHREN, MANAGEMENTSERVER, SPEICHERVORRICHTUNG UND SYSTEM
PROCÉDÉ DE STOCKAGE DE DONNÉES, SERVEUR DE GESTION, ÉQUIPEMENT ET SYSTÈME DE STOCKAGE

(30) Priority: 22.11.2007 CN 200710177912; 22.11.2007 CN 200710177913
(43) Date of publication of application: 30.06.2010
(73) Proprietor: China Mobile Communications Corporation, Beijing 100032 (CN)
(72) Inventor: OUYANG, Congxing, Beijing 100032 (CN); XUE, Haiqiang, Beijing 100032 (CN); WEI, Bing, Beijing 100032 (CN); WANG, Xiaoyun, Beijing 100032 (CN); ZHAO, Min, Beijing 100032 (CN)
(74) Representative: Manitz, Finsterwald & Partner GbR
(86) International application number: PCT/CN2008/072584
(87) International publication number: WO 2009/065318

(56) References cited:
- WO-A1-2006/056681
- CN-A- 1 505 909
- CN-A- 1 896 961
- CN-A- 101 118 508
- US-A1- 2003 084 076
- US-A1- 2004 103 238
- US-A1- 2004 243 763
- US-A1- 2005 210 098
- US-B1- 7 194 538

## Description

### Field of the Invention

The present invention relates to a data service technology in the field of communications and particularly to a data storage method, device and system and a management server.

### Background of the Invention

Storage of user data is required in the field of telecommunications, for example, storage of a large amount of user registration information, service attributes, etc., is required in the field of mobile communications. In the prior art, user data is generally stored in clusters, and an existing storage system is divided into several clusters each including two or more devices used for storing user data, each of the devices in a cluster used for storing user data is referred to as a node in that cluster, all of the nodes in each of the clusters are provided with identical user data while different clusters are provided with different user data.

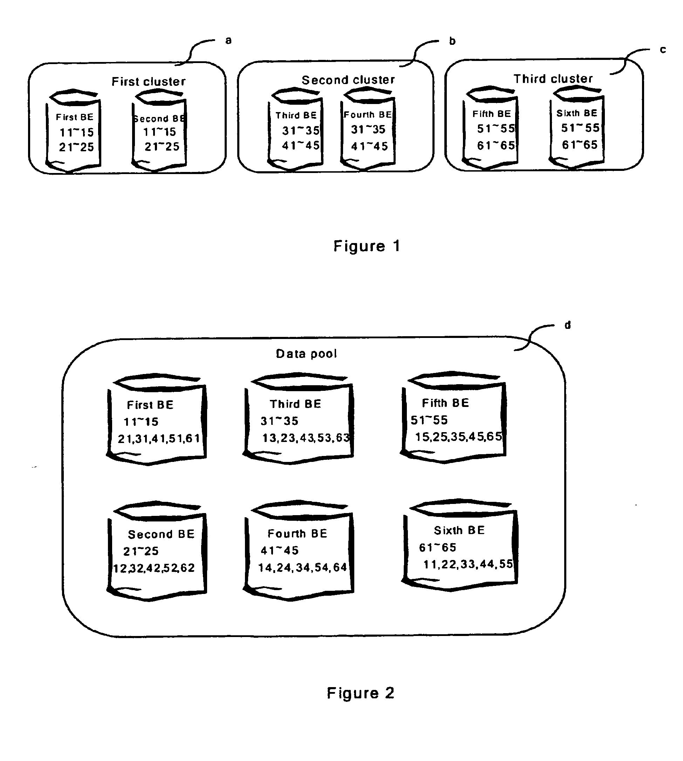

Clustered storage management of user data in the prior art is illustrated in Fig.1 which is a schematic diagram of the structure of an existing data storage system. As illustrated in Fig.1, the storage system includes three clusters, i.e., a first cluster a, a second cluster b and a third cluster c. In Fig.1, each of the clusters includes two storage devices each referred to as a Back End (BE), and upon receipt of new user data, each BE in a cluster automatically stores locally the data and also stores the data into other nodes in the cluster, so that all the BEs in each cluster store identical data. As illustrated in Fig.1, the first cluster a consists of a first BE and a second BE into both of which data of users 11-15 and 21-25 is stored; the second cluster b consists of a third BE and a fourth BE into both of which data of users 31-35 and 41-45 is stored; and the third cluster c consists of a fifth BE and a sixth BE into both of which data of users 51-55 and 61-65 is stored.

In an existing storage approach, when a node fails, a user is ensured to be served normally by the other nodes, i.e., the other BE devices, in the cluster to which the failing node belongs, so that data of the user is protected against a loss to some extent. However, the existing storage approach stills suffers from the following drawbacks in that: after a Back End device (also referred to as a node) in a cluster fails, the other nodes in the cluster take over all the load of the failing node, for example, all the access traffic is added to the other nodes, which tends to cause an increased load on the other nodes. Consequently, the existing storage approach tends to cause instability of the devices and even a serious condition of overload, inoperability, etc., of the nodes.

Illustratively in Fig.1, it is assumed that each BE in each cluster has a CPU load of 40% in a normal condition, then after the first BE in the first cluster fails, all its access traffic is taken over by the second BE, as listed in Table 1, so that the load of the second BE is increased sharply up to 80%, which causes instability of the second BE.

**Table 1: Loads of nodes in the clusters**

| | First Cluster | | Second Cluster | | Third Cluster | |
|---|---|---|---|---|---|---|
| In Normal Condition | First BE: 40% | Second BE: 40% | Third BE: 40% | Fourth BE: 40% | Fifth BE: 40% | Sixth BE: 40% |
| After First BE Fails | First BE: 0% | Second BE: 80% | Third BE: 40% | Fourth BE: 40% | Fifth BE: 40% | Sixth BE: 40% |

As can be apparent from Table 1, the existing storage approach tends to cause instability of the storage system, and the inventors have also found during making of the invention that the amount of actually lost user data cannot be predicted by the existing storage approach when a number of nodes (i.e., a number of BEs in Fig.1) fail. By way of an example, it is assumed that a storage system includes N/2 clusters each including two data storage nodes, thus the storage system totally has N nodes, and when a number M (M < N) of nodes fail, the amount of lost data is as follows:
1) In the worst case, the failing M nodes are paired, then all the user data in an integer number M/2 of clusters is lost and can not be recovered, and the ratio of the lost user data to all the user data is M/N;
2) In the best case, the failing M nodes belong to different clusters respectively and M is smaller than N/2, then a user of one of the failing nodes can be served normally by another node in the same cluster, and here no data is lost; and
3) In a general case, the amount of lost data is between those in the above cases 1) and 2).

As can be apparent from the foregoing three cases in which the amount of lost data is calculated, the existing user data storage approach suffers from poor predictability, and when a number of nodes fail, inaccurate prediction and control may cause a loss of user data, and consequently the user can not be served and hence influenced, for example, obstructed switching may cause an increased number of complaints.

Therefore, in the existing data storage approach, when a node in a cluster fails, only the remaining nodes in the cluster can take over the load from the failing node, so that the cluster with the failing node is problematic due to an increased load on the remaining nodes in the cluster, instability and a low resource utilization ratio of the nodes, and even a serious condition of overload and inoperability of the nodes; and the existing data storage approach suffers from poor predictability of the amount of actually lost data and consequential unpredictability of the number of complaining users.

US 2004/0243763 A1 discloses multiple applications request data from multiple storage units over a computer network. The data is divided into segments and each segment is distributed randomly on one of several storage units, independent of the storage units on which other segments of the media data are stored. At least one additional copy of each segment also is distributed randomly over the storage units, such that each segment is stored on at least two storage units. This random distribution of multiple copies of segments of data improves both scalability and reliability. When an application requests a selected segment of data, the request is processed by the storage unit with the shortest queue of requests. Random fluctuations in the load applied by multiple applications on multiple storage units are balanced nearly equally over all of the storage units. This combination of techniques results in a system which can transfer multiple, independent high bandwidth streams of data in a scalable manner in both directions between multiple applications and multiple storage units. The features of the preamble of the independent claims are known from US 2004/0243763 A1.

WO 2006/056681 A1 relates to computer networks and to a digital data protection thereon, in particular to a method for the distributed backup of a digital data block (B) in an computer network comprising a DHT distributed hash table and at least one node NO, wherein said NO nodes are connected to said network. The inventive method consists in dividing said block B into digital data r fragments F, in storing the fragment F in the NO_{F} resource memories, in recording couples (block B, node NO_{F}) and (node NO_{F}, fragment F) in the DHT parts contained in at least two nodes and in a centralised server when no operation on the DHT or storage operation is carried out during said process.

### Summary of the Invention

An object of the invention is to provide a data storage method, device and system and a management server so as to address the problems caused by the clustered data storage in the prior art that a failing node causes an increased load on and instability of another node and a low utilization ratio, poor predictability, etc., of a node, so that a node may possess high stability despite any other failing node, and the resource utilization ratio and predictability of the node (storage device) may be improved.

In order to achieve the foregoing object, a data storage method is provided according to an aspect of the invention.

The data storage method according to an embodiment of the invention includes: constituting a data pool by all of n data storage devices; and when there is data for storage, polling all the devices in the data pool to select a group of m devices, and storing the data into each of the selected group of m devices, where m is larger than 1 and smaller than n; wherein the method further includes: detecting the loads of all the data storage devices in the original data pool when a new device joins or quits the data pool; upon detection of at least one of the devices in the original data pool with a load exceeding a preset value and upon receipt of a join request to join the data pool from a new device transferring part of data stored on the device with a load exceeding the preset value to the new device.

Preferably, a management server may be arranged in the data pool to manage all the devices and perform the polling and selecting operations.

Particularly, polling all the devices in the data pool to select the group of m devices may include: polling, by the management server, in the data pool under the principal of Cₙ^{m} to select the group of m storage devices.

Preferably, polling all the devices in the data pool to select a group of m devices and storing the data into each of the selected group of m devices may include: when a device in receipt of a data insertion request corresponding to the data detects that the data insertion request is from the outside of the data pool, the device stores the received data, polls the other devices in the data pool to select a number m-1 of devices, and stores the data into each of the selected m-1 devices.

In order to achieve the foregoing object, there is further provided according to another aspect of the invention a management server including: a determination module, configured to determine whether there is data for storage; a resource allocation module connected with the determination module, and configured to poll, when there is data for storage, in a data pool composed of all of n data storage devices to select a group of m devices, and transmit the data to the each of the m devices, where m is larger than 1 and smaller than n; and a management module connected with the resource allocation module and configured to manage all the devices and device resources in the data pool, wherein the management module includes: a monitoring sub-module configured to monitor all the devices in the data pool, and upon receipt of a quit request from one of the devices in the data pool and/or a join request from a new device to join the data pool, update devices resources in the data pool under management and transmit the total number of all the updated devices to the resource allocation module; an analysis sub-module connected with the monitoring sub-module, and configured to transmit, upon receipt of a join request to join the data pool from a new device, load query request to all the devices in the original data pool, and analyze load information returned from all the devices; and an execution sub-module connected with the analysis sub-module, and configured to transfer, when there is at least one of the devices in the original data pool with a load exceeding a preset value, part of data stored on the device with a load exceeding the preset value onto the new device.

Preferably, the resource allocation module may include: a storage sub-module, configured to store the total number n of all the devices in the data pool and the number m of the selected devices; a poll calculation sub-module connected with the storage sub-module and configured to select a group of m devices via polling under the principal of Cₙ^{m}; and a transmission sub-module connected with the poll calculation sub-module and configured to transmit the data for storage to each of the selected m devices.

In order to achieve the foregoing object, there is further provided according to a further aspect of the invention a data storage system including the foregoing management server and a plurality of data storage devices all of which are connected with and managed centrally by the management server.

In order to achieve the foregoing object, a storage device is further provided according to a further aspect of the invention.

The storage device according to an embodiment of the invention includes: an analysis module, configured to analyze a data insertion request; a resource allocation module connected with the analysis module, and when it is the first time for a data pool to receive the data insertion request, the resource allocation module stores data corresponding to the data insertion request, polls the other devices in the data pool to select a number m-1 of devices, and transmits the data to each of the selected m-1 devices; and when the data for insertion is forwarded from another device in the data pool, the resource allocation module merely stores the data corresponding to the data insertion request; and a management module connected with the resource allocation module and configured to manage both the devices in the data pool and resources information throughout the loop link of the data pool; wherein the management module includes: a monitoring sub-module configured to monitor all the other devices in the data pool, and upon receipt of a quit request from another device in the data pool and/or a join request from a new device to join the data pool, update resources under management and send the total number of the devices in the updated data pool to the resource allocation module; an analysis sub-module connected with the monitoring sub-module, and configured to forward, upon receipt of the join request from a new device outside the data pool, the join request of the new device to the other devices, and to analyze the loads of all the devices in the original data pool; and an execution sub-module connected with the analysis sub-module, and configured to transfer, when at least one of the devices in the original data pool has a load exceeding a preset value, part of data stored on the device with a load exceeding the preset value to the new device.

Preferably, the resource allocation module of the storage device may include: a storage sub-module, configured to store the total number n of all the devices in the data pool and the number m of selected devices and to store the data for insertion; a poll calculation sub-module connected with the storage sub-module, and when the data insertion request is from the outside of the data pool, the poll calculation sub-module selects a number m-1 of other devices in the data pool via polling under the principal of Cₙ₋₁^{m-1}; and a transmission sub-module connected with the poll calculation sub-module and configured to transmit the data to each of the m-1 devices.

In order to achieve the foregoing object, a data storage system is further provided according to a further aspect of the invention.

The data storage system according to an embodiment of the invention includes a plurality of foregoing storage devices constituting a data pool; and any one of the storage devices has both the resource allocation module connected with the analysis modules of the other storage devices and the management module connected with the management modules of the other storage devices.

Summarily in the invention, all the data storage devices constitute one data pool (simply one pool), and the storage devices in the pool will not be further divided. Different data is stored as decentralized as possible onto different devices in the pool, so that the data is subject to evenly decentralized storage onto several BEs in the data poll to thereby improve the resource utilization ratio. According to the invention, after a device fails, the data access traffic corresponding to the device will be taken over by the plural nodes in the pool to thereby achieve good disaster-tolerant feature and improve stability of the system. Also as have been verified for the invention, the ratio of data lost due to some failing storage devices may be deterministic and calculated, and therefore the foregoing technical solutions according to the invention have better controllability than the prior art, and may perform prediction after failing of a device to avoid an influence resulting from poor predictability.

The technical solutions of the invention will be further detailed hereinafter with reference to the drawings and the embodiments.

### Brief Description of the Drawings

The drawings constituting a part of the specification are intended to provide further understanding of the invention and together with the embodiments of the invention serve to explain but not limit the invention. In the drawings:

Fig.1 is a schematic diagram of the structure of an existing data storage system;

Fig.2 is a schematic diagram illustrating an embodiment of a data storage method according to the invention;

Fig.3 is a flow chart of an embodiment of the data storage method according to the invention;

Fig.4 is a flow chart of an embodiment of a centralized data storage method according to the invention;

Fig.5 is a flow chart of another embodiment of the centralized data storage method according to the invention

Fig.6 is a schematic diagram of a first embodiment of a management server according to the invention;

Fig.7 is a schematic diagram of a second embodiment of the management server according to the invention;

Fig.8 is a schematic diagram of an embodiment of a centralized data storage system according to the invention;

Fig.9 is a schematic diagram of another embodiment of the centralized data storage system according to the invention;

Fig.10 is a schematic diagram of an embodiment of a distributed data storage system according to the invention;

Fig.11 is a flow chart of an embodiment of a distributed data storage method according to the invention;

Fig.12 is a flow chart of another embodiment of the distributed data storage method according to the invention;

Fig.13 is a flow chart of a further embodiment of the distributed data storage method according to the invention;

Fig.14 is a schematic diagram of a first embodiment of a storage device according to the invention;

Fig.15 is a schematic diagram of a second embodiment of the storage device according to the invention;

Fig.16 is a schematic diagram of an embodiment of the structure of a monitoring sub-module in Fig.15; and

Fig.17 is a schematic diagram of another embodiment of the distributed data storage system according to the invention.

### Detailed Description of the Embodiments

Reference is made to Fig.2 which is a schematic diagram illustrating an embodiment of a data storage method according to the invention. The invention proposes a novel data storage method, which is referred to as data pool storage for short hereinafter. The differences between the storage method in the disclosure and that in the prior art are introduced hereinafter with reference to Fig.2 in an example that a data storage system includes six storage devices where data of users 11-15, 21-25, 31-35, 41-45, 51-55 and 61-65 is stored.

1. Clustered storage is adopted in the prior art, for example, a first BE and a second BE belong to a first cluster a and both store the data of the users 11-15 and 21-25; a third BE and a fourth BE belong to a second cluster b and both store the data of the users 31-35 and 41-45; and a fifth BE and a sixth BE belong to a third cluster c and both store the data of the users 51-55 and 61-65;

2. Data pool storage is adopted in the disclosure, and the same data as in Fig.1 is stored in a different way, as illustrated in Fig.2, all the data storage devices constitute one data pool d in which the data of the users 11-15 is present on the first BE and also is subject to decentralized storage onto the other five BEs instead of being stored onto the second BE as in Fig.1, and the same data storage way is applied to the second BE to the sixth BE. Therefore, once a device fails, the access traffic on the failing device is shared among the other five BEs in the pool, which will not cause any one of the other devices to be overloaded.

It is assumed that each node in the data pool d has a CPU load of 40% in a normal condition, then as illustrated in Fig.2, when the first BE fails, the other devices are influenced as listed in Table 2:

**Table 2: Loads of nodes in the data pool**

| | First BE | Second BE | Third BE | Fourth BE | Fifth BE | Sixth BE |
|---|---|---|---|---|---|---|
| In Normal Condition | 40% | 40% | 40% | 40% | 40% | 40% |
| After First BE Fails | 0 | 48% | 48% | 48% | 48% | 48% |

As can be apparent from Tables 1 and 2, in a data storage approach in the prior art, when a node fails, only the remaining nodes in the cluster to which the failing node belongs can take over the load from the failing node, so that the cluster with the failing node is problematic, for example, due to the increased load on and instability of the remaining nodes. However, the invention adopts a data pool for decentralized storage of data so that different data is subject to decentralized storage onto different nodes in the data pool, and therefore once a node fails, the access traffic on the failing node is shared among the other plural nodes in the data pool to address the problems of overloading and instability of any device that tend to arise in the existing storage approach.

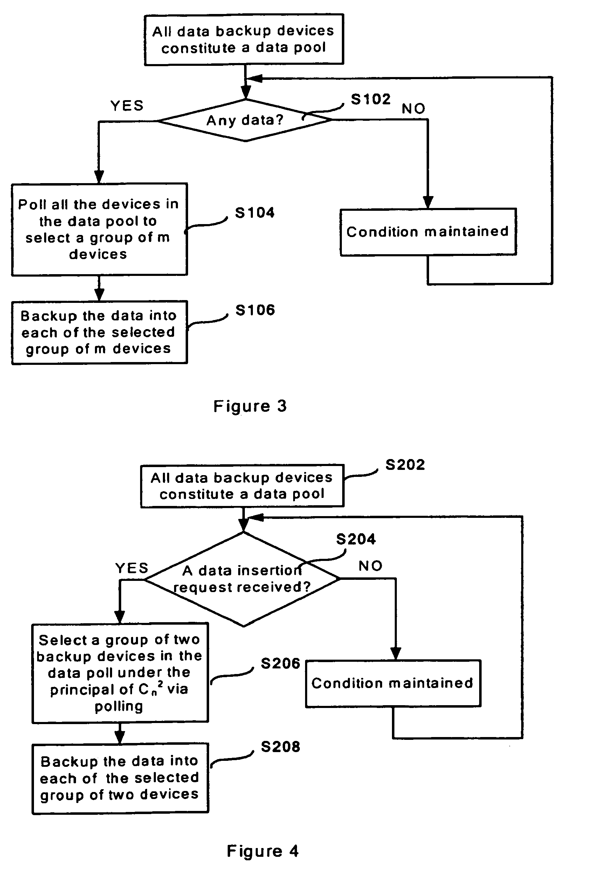

Fig.2 is a schematic diagram particularly illustrating the data storage method according to the invention, and Fig.3 is a flow chart illustrating the implementation of an embodiment of the data storage method according to the invention. As illustrated in Fig.3, the present embodiment includes the following operations.

Operation S102: It is determined whether any data is to be stored, and if so, operation S104 is performed; otherwise, it is maintained unchanged;

Operation S104: When there is data for storage, a group of m devices are selected via polling all the devices in the data pool;

Operation S106: The data is stored into each of the selected group of m devices, where m is larger than one and smaller than the total number of all the devices.

Particularly, all the data storage devices constitute one data pool in the foregoing embodiment. Referring to Fig.2 which is a schematic diagram illustrating the present embodiment, when data to be stored is received, a group of storage devices in the data pool are selected via polling, and the data for storage is stored into each of the devices in the selected group. Upon each selecting via polling, a different group is selected and used for the storage of data, therefore different data is stored at different locations. As illustrated in Fig.2, the data of the user 11 is stored onto the first BE and the sixth BE, and the data of the user 35 is stored onto the third BE and the fifth BE. The data pool is adopted for decentralized storage so that different data is subject to decentralized storage onto different nodes in the data pool, and therefore when a node fails, the data on the failing node is shared among the other plural nodes in the data pool to thereby prevent an overload of any device and also maintain stability of the devices.

The data storage method according to the invention may be implemented in various ways, and both centralized and distributed implementations of data storage according to the invention are exemplified hereinafter.

Particularly, Figs.4 to 9 are diagrams of embodiments of a data storage method and system, and a management server adopting centralized management according to the invention.

Reference is made to Fig.4 which is a flow chart of an embodiment of the centralized data storage method according to the invention. Fig.4 is a flow chart illustrating a centralized implementation of the embodiment of the data storage in Fig.3, and the embodiment in Fig.4 includes the following operations.

Operation S202: All data storage devices constitute one data pool in which a management server is arranged to manage all the devices;

Operation S206: When there is a data insertion request, the management server selects a group of two storage devices in the data pool via polling under the principal of Cₙ², where n is the total number of all the devices in the data pool; and the principal of Cₙ² is generally known in the field of mathematics, represents the drawer principal and means that a group of two drawers are selected arbitrarily from a number n (n is a natural number larger than 2) of drawers without distinguishing a selection sequence for the group. The calculation equation for Cₙ² is as Cₙ² Pₙ²/2!, where Pₙ² represents a permutation of two drawers selected arbitrarily from the n drawers in a selection sequence, and two drawers with different selection sequence may form two different permutations; and 2! represents 2×1=2, and since these are generally known in the field of mathematics, detailed descriptions thereof is omitted here. In the present embodiment, the number of combinations of two storage devices selected arbitrarily from the data pool (including a total number n of devices) may be calculated under the mathematical drawer principal while adopting the polling approach to thereby ensure storage of different data in different groups;

Operation S208: The data for storage is stored into each of the two devices of the selected group.

Selecting two devices for storing data via polling is illustrated in the present embodiment, but of course, if each data item is intended to be stored on three devices, then it is possible to select three devices via polling using the principle of Cₙ³, and so on. There are various combinations of Cₙ² in the present embodiment, but the management server performs polling instead of randomly selecting to select one combination from the several combinations of Cₙ² to thereby guarantee the principal of decentralized data storage to the maximum extent.

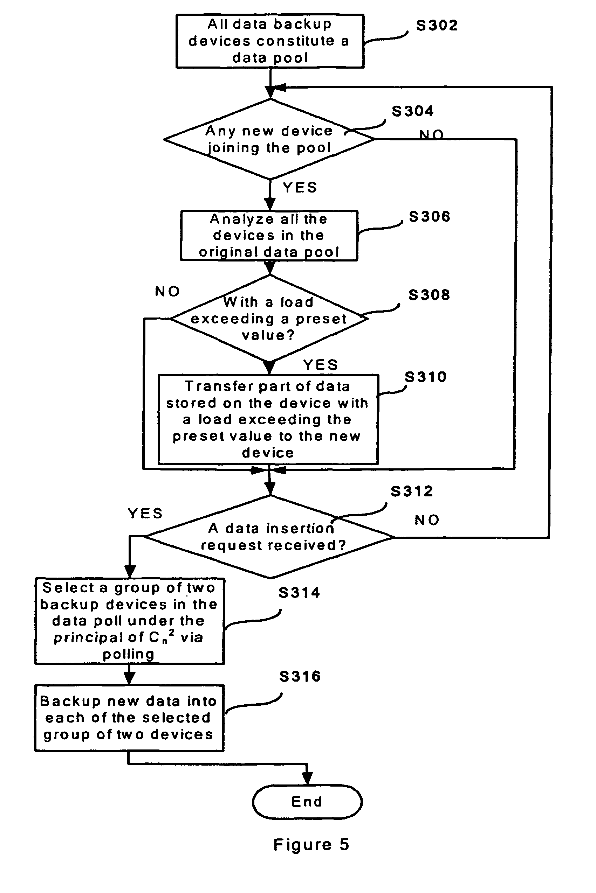

Reference is made to Fig.5 which is a flow chart of another embodiment of the centralized data storage method according to the invention. As illustrated in Fig.5, the present embodiment further includes operations for adding a node as compared with Figs.3 and 4, and the present embodiment in Fig.5 includes the following operations.

Operation S302: All data storage devices constitute a data pool in which a management server is arranged to manage all the devices;

Operation S304: The management server determines whether there is a device newly joining the data pool, and if so, operation S306 is performed; otherwise, operation S312 is performed;

Operation S306: The management server analyzes, i.e., detects the loads of, all the data storage devices in the original data pool;

Operation S308: The management server determines from the detection result whether any device in the original data pool is overloaded, i.e., whether there is one or more devices with a load exceeding a preset value, and if so, operation S310 is performed; otherwise, operation S312 is performed;

Operation S310: Part of data stored on the device with a load exceeding the preset value is transferred onto the newly added device;

Operation S312: The management server determines whether a data insertion request message has been received, and if not, it is maintained unchanged and operation S304 is performed; otherwise, operation S314 is performed;

Operation S314: The management server selects a group of two storage devices from the data pool via polling under the principal of Cₙ², where n is the total number of all the devices in the data pool;

Operation S316: Data for storage is stored onto each of the selected group of two devices, and the flow ends.

The present embodiment includes the operations for a joining node, i.e., when a device is newly added to the data pool constituted by the original devices, all the devices in the original data pool are further analyzed to determine whether any of the original devices is overloaded, and if so, the portion of data overloading the device is transferred onto the newly added device to further optimize the storage system and improve stability and disaster-tolerant feature of the storage system.

Particularly, the portion of data overloading the device may be transferred onto the newly joined device as follows: the portion of data beyond the preset load on a device with a load exceeding the preset load is stored onto the newly added device and deleted from the overloaded device, where data stored onto the new device varies from one device with a load exceeding the preset load to another.

The advantageous effects of preventing a device from being overloaded, achieving high reliability of the device, etc., of the data storage method according to the invention have been described in the foregoing method embodiments, and also high controllability of the data storage method according to the embodiments of the invention is verified hereinafter by way of an example.

It is assumed that a number n (n is a natural number larger than one) of data storage devices constitute one data pool and are referred to as a number n of nodes in the data pool, and data of a number n×X of users needs to be stored by storing two copies of the data of each user into the data pool, that is, a total number 2n×X of data items are stored on all the nodes in the data pool, then upon insertion of any user data, two nodes are selected arbitrarily from the n nodes (C²ₙ), and the user data is put into the two selected nodes, and this can be understood as the principal of C²ₙ generally known in mathematics that there are a total number C²ₙ of drawers and the data of the n×X users is put evenly into the number C²ₙ of drawers to thereby guarantee the principal of as decentralized data storage as possible. In the foregoing embodiments of the invention, the management server adopts polling for data storage to ensure the decentralized data storage as possible, so that a number 2X of data items are finally stored on each node, and the 2X data items include a number X of data items being subject to decentralized storage onto the other (n-1) nodes and the other X data items respectively stored on the other (n-1) nodes as illustrated in Fig.2. It is assumed that a number m of nodes in the data pool fail, and then:

1) the amount of lost user data is represented by C²ₘ×the amount of lost user data per couple of nodes = C²ₘ×(2X/(n-1)) = (m-1)×m×(X/(n-1)); and

2) the ratio of lost user data is represented by the amount of lost user data/the total amount of user data = ((X/(n-1))×(m-1)×m)/(n×X) = m×(m-1)/(n×(n-1)).

In the foregoing calculation equations, n and m are natural numbers larger than one. As can be apparent from the foregoing verification with calculation, the amount of lost user data due to some failing nodes may be determined and thus high controllability and well predictability may be achieved. In the prior art, clustered storage is adopted so that the amount of lost user data depends on the failing nodes and predictability is poor, and the foregoing method embodiments according to the invention may avoid an influence resulting from an incontrollable number of complaining users due to poor predictability in the prior art.

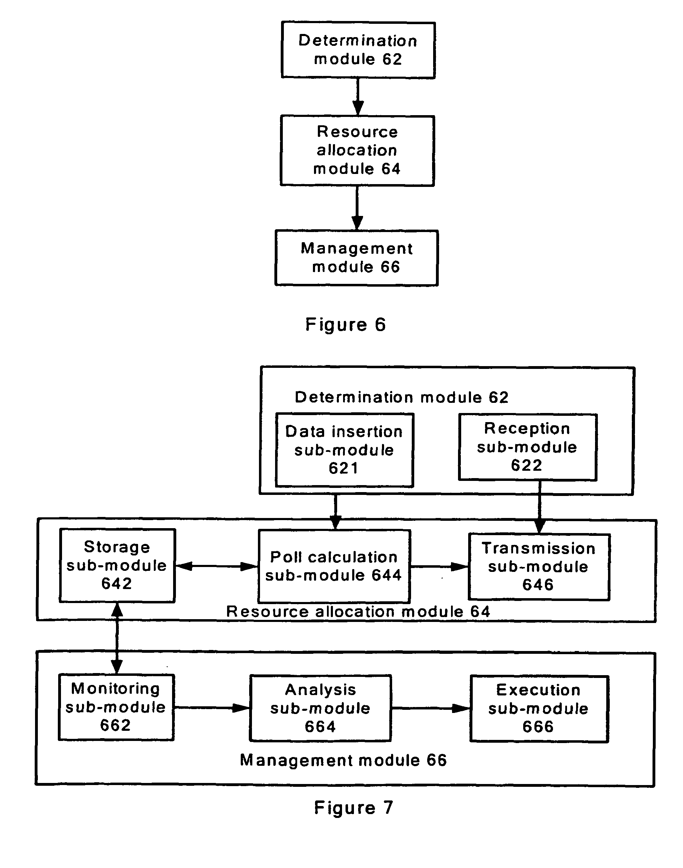

Reference is made to Fig.6 which is a schematic diagram of a first embodiment of the management server according to the invention. As illustrated in Fig.6, the present embodiment includes:

a determination module 62 configured to determine whether there is data for storage;

a resource allocation module 64 connected with the determination module 62, and configured to poll, when there is data for storage, a data pool composed of all data storage devices to select a group of m devices, and to transmit the data to each of the selected group of m devices for storage, where m is a natural number larger than one and smaller than the total number of all the devices; and

a management module 66 connected with the resource allocation module 64, and configured to manage the total number and resources of all the devices in the data pool.

In the present embodiment, through managing centrally the data pool composed of all the devices, the management server may select the nodes for storage via polling and allocate the resources or loads for each of the devices to address the problems that an existing storage device (e.g., BE) which fails causes an increased load on and instability of other devices and that the existing storage device has a low resource utilization ratio, so as to achieve high reliability of each storage device and also improve the utilization ratio of each storage device.

Reference is made to Fig.7 which is a schematic diagram of a second embodiment of the management server according to the invention. Fig.7 presents further details of the functional modules in the embodiment of Fig.6.

As illustrated in Fig.7, the determination module 62 in the present embodiment includes: a data insertion sub-module 621 configured to trigger the resource allocation module 64 upon receipt of a data insertion request message; and a reception sub-module 622 connected with the data insertion sub-module 621 and configured to receive data for insertion.

The resource allocation module 64 includes: a storage sub-module 642 configured to store the total number n of all the devices in the data pool and the number m of selected devices; a poll calculation sub-module 644 connected with the storage sub-module 642 and the data insertion sub-module 621, and configured to invoke, upon receipt of the data insertion request message, the storage sub-module 642, and to select a group of m devices via polling under the principal of Cₙ^{m}; and a transmission sub-module 646 connected with the poll calculation sub-module 644 and the reception sub-module 622, and configured to transmit the data for insertion onto each of the selected group of m devices;

The management module 66 includes: a monitoring sub-module 662 connected with the storage sub-module 642 and configured to monitor all the devices in the data pool, and upon receipt of a quit request from a device in the data pool and/or a join request from a new device to join the data pool, update resources under management, and transmit the updated total number of all the devices to the storage sub-module 642; an analysis sub-module 664 connected with the monitoring sub-module 662, and configured to transmit, upon receipt of a join request from a new device to join the data pool, load query request to all the devices in the original data pool, and to analyze and detect load information returned from all the devices; and an execution sub-module 666 connected with the analysis sub-module 664, and configured to transfer, when there is more than one of the devices in the original data pool with a load level exceeding a preset value, part of data stored on the device with a load level exceeding the preset value onto the new device.

In the embodiment of Fig.7, the determination module processes the data insertion request, and the management module manages and updates information of registration, quit, etc., of each node device in the data pool, and monitors all the time the whole data pool to facilitate decentralized storage of data for storage upon its receipt. The embodiments in Figs.6 and 7 have similar functions to those in the method embodiments of Figs.2 to 5, and for details thereof, reference may be made to the introductions of the principal and technical solutions regarding the method embodiments, and repeated descriptions thereof will be omitted here.

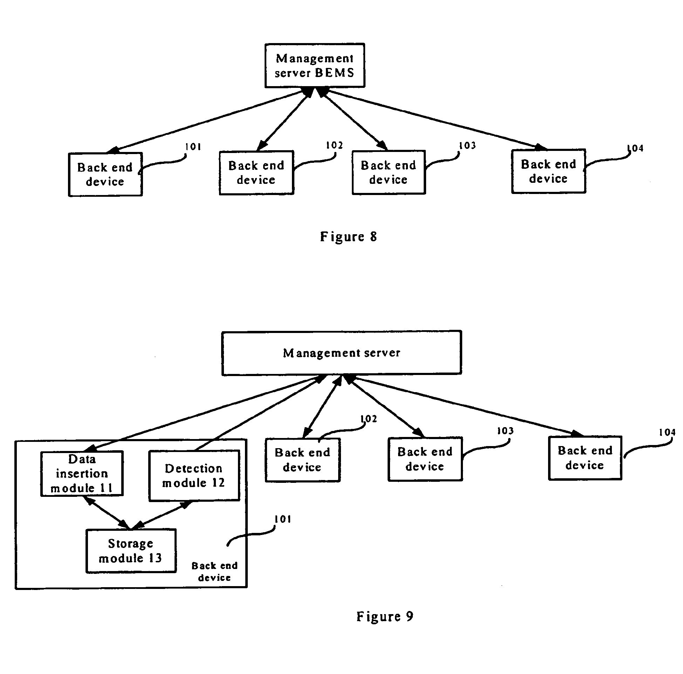

Fig.8 is a schematic diagram of an embodiment of a centralized data storage system according to the invention. As illustrated in Fig.8, in the present embodiment, there are four data storage devices, i.e., Back End devices 101 to 104, and a Back End Management Server (BEMS) managing the four devices, and a data pool is constituted by the four Back End devices 101 to 104 which are required to register with the management server and manage stored data through the management server. For the management server in the present embodiment, reference may be made to the embodiments of Figs.6 and 7, and repeated descriptions thereof will be omitted here.

The data storage system according to the present embodiment may address the problems of data storage in an existing clustered storage system that a failing node causes an increased load on and instability of another node and that each node in the existing data storage system has a low utilization ratio and poor predictability of a loss amount, so as to achieve high reliability of the storage system despite any failing node and also improve the resource utilization ratio and predictability throughout the system.

Reference is made to Fig.9 which is a schematic diagram of another embodiment of the centralized data storage system, which has the same functions and advantageous effects as those illustrated in Fig.8. In the present embodiment, the management server adopts the structure in the embodiment of Fig.6 or 7, and further details of the Back End device, i.e., the storage device, are presented. As illustrated in Fig.9, the Back End device 101 in the present embodiment includes:

a data insertion module 11 configured to receive data for insertion transmitted from the management server, e.g., the data transmitted from the transmission sub-module in the embodiment of Fig.7;

a storage module 13 connected with the data insertion module 11 and configured to store the data for insertion and to calculate the load on the device; and

a detection module 12 connected with the storage module 13, configured to transmit a quit or join request to the management server, e.g.. to the monitoring sub-module illustrated in Fig.7, when the device quits or joins the data pool, to keep communication with the management server after the device joins the data pool, and to return current load information of the device upon receipt of a device load query request from the management server.

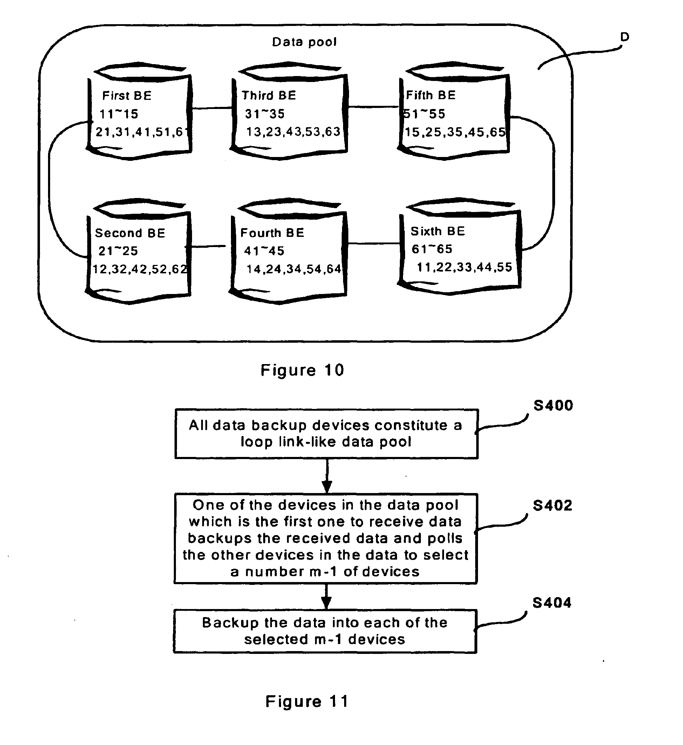

Data storage implemented with centralized management has been exemplified in the foregoing embodiments of Figs.4 to .9, and Figs.10 to 17 below are diagrams of embodiments of a data storage method, device and system with distributed management. In the centralized data storage method, the polling operation is performed primarily by the management server, and each of the storage devices in the data pool performs the function of data storage. Unlike the centralized data storage method, the distributed data storage method has no unified management server configured to manage the storage devices in the data pool but instead distributes a part of the management function of the management server in the case of centralized data storage to the storage devices in the data pool, and each of the storage devices in the distributed data pool may perform the polling operation.

Fig.10 is a schematic diagram of an embodiment of the distributed data storage system according to the invention. The present embodiment proposes a novel framework of the data storage method and system, and as illustrated in Fig.10, the present embodiment adopts data pool loop link storage, and similarly to the embodiment in Fig.2, the differences between the data storage system with distributed storage in the disclosure and that in the prior art are introduced hereinafter with reference to Fig.10 in an example that the storage system includes six storage devices, i.e., a first BE to a sixth BE, where data of users 11-15, 21-25, 31-35, 41-45, 51-55 and 61-65 is stored.

1. As illustrated in Fig.1, clustered storage is adopted in the prior art, and a first BE and a second BE belong to a first cluster a and both store the data of the users 11-15 and 21-25; a third BE and a fourth BE belong to a second cluster b and both store the data of the users 31-35 and 41-45; and a fifth BE and a sixth BE belong to a third cluster c and both store the data of the users 51-55 and 61-65;

2. As illustrated in Fig.10, data pool storage is adopted in the present embodiment, and all the data storage devices may constitute a loop link-like data pool D; and the same data as in Fig.1 is stored in a different way, as illustrated in Fig.10, the data of the users 11-15 is present in the first BE and also is subject to decentralized storage onto the other five BEs, and therefore once a device, e.g., the first BE fails, the access traffic on the first BE is shared among the other five BEs in the pool, which will not cause any one of the other devices to be overloaded.

It is assumed that each node in the data pool D has a CPU load of 40% in a normal condition, then as illustrated in Fig.10, when the first BE fails, the other devices are influenced as listed in Table 3:

**Table 3: Loads of nodes in the data pool**

| | First BE | Second BE | Third BE | Fourth BE | Fifth BE | Sixth BE |
|---|---|---|---|---|---|---|
| In Normal Condition | 40% | 40% | 40% | 40% | 40% | 40% |
| After First BE Fails | 0 | 48% | 48% | 48% | 48% | 48% |

As can be apparent from Table 3, decentralized storage is performed with the loop link-like data pool in the present embodiment so that different data is subject to decentralized storage onto different nodes in the data pool, and therefore once a node fails, the access traffic of the failing node is shared among the other nodes in the data pool to avoid the device overloading and instability in the existing storage approach.

Fig.11 is a flow chart of an embodiment of the distributed data storage method according to the invention. As illustrated in Fig.11, the present embodiment includes the following operations.

Operation S402: One of the devices in the data pool, at which a data insertion request is received first, stores received data and polls the other devices in the data pool to select a number m-1 of devices;

Operation S404: The data is transmitted to each of the selected m-1 devices, where m is a natural number larger than one and smaller than the total number of all the devices.

In the present embodiment, the data pool is a data pool constituted by all the data storage devices. As illustrated in Fig.10, the data pool may be loop link-like. In the embodiment of Fig.11, upon receipt of data for insertion, one of the devices which is the first one receiving the data stores the data locally and then selects the other m-1 devices via polling. The data for insertion are stored onto totally m devices in the data pool, including the device which receives the data for insertion first. Since the device which is the first one receiving the data has stored the data locally, the data will be transmitted to the selected m-1 devices for storage. Upon each selecting via polling, a different group is used for storage, and therefore different data is stored at different locations. As illustrated in Fig.10, the data of the user 11 is stored onto the first BE and the sixth BE, and the data of the user 15 is stored onto the first BE and the fifth BE. The data pool is adopted for decentralized storage so that different data is subject to decentralized storage onto different nodes in the data pool, and therefore when a node fails, sharing is realized among the other plural nodes in the pool to thereby prevent an overload of the devices and also maintain stability of the devices.

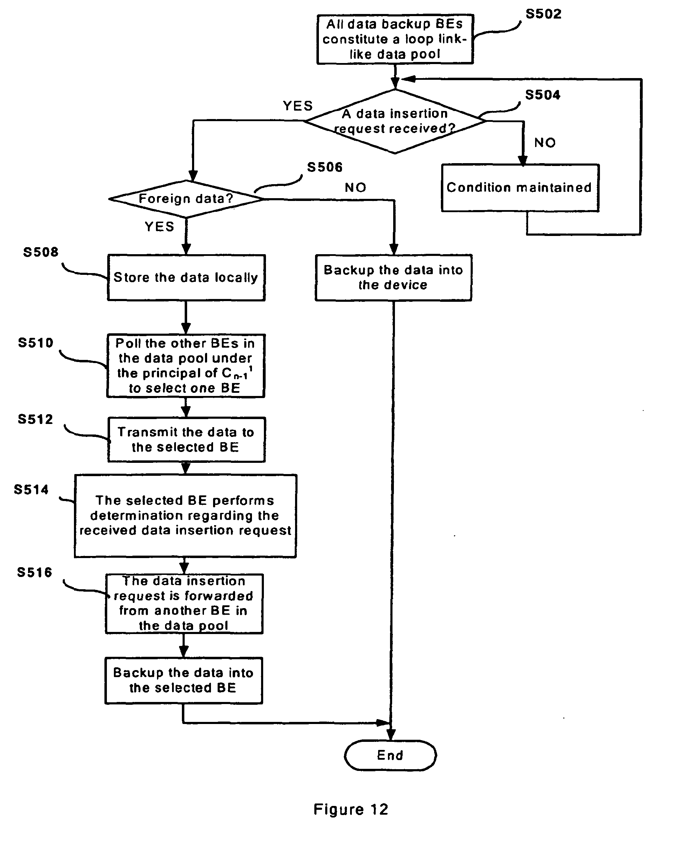

Reference is made to Fig.12 which illustrates more particularly a flow chart of another embodiment of the distributed data storage method according to the invention, and the present embodiment includes the following operations.

Operation S506: Upon receipt of a data insertion request, it is determined whether the data is from the outside of the data pool, and if so, operation S508 is performed; otherwise, the data is determined to be data forwarded within the data pool and is stored, and the flow ends;

Operation S508: The data is stored;

Operation S510: One of the other devices in the data pool is selected under the principal of Cₙ₋₁¹, where n is the total number of all the devices; and the principal of Cₙ₋₁¹ is generally known in the field of mathematics, represents the drawer principal and means that a group of one drawer is selected arbitrarily from a number n-1 (n is a natural number larger than 2) of drawers without distinguishing a selection sequence for the group. The Cₙ₋₁¹ is calculated as Cₙ₋₁¹=Pₙ₋₁¹/1, where Pₙ₋₁¹ represents a permutation of one drawer selected arbitrarily from the n-1 drawers in a selection sequence, and since these are generally known in the field of mathematics, repeated descriptions thereof are omitted here. In the present embodiment, the number of combinations of one storage device selected arbitrarily from the other devices in the data pool (including a total number n of devices) may be calculated under the mathematical drawer principal while adopting the polling approach to thereby ensure storage of different data in different groups;

Operation S512: The data is transmitted to the selected device (BE).

In the foregoing operations, if a device in receipt of a data insertion request is the first one of the BEs in the data pool which receives the data for insertion, then a group of BEs are selected through polling and the data is transmitted to the selected group of the BEs; on the other hand, if a data insertion request is forwarded from another BE in the data pool, then only a storage operation needs to be performed. Specifically, related source information may be added in a data insertion request, and if the data insertion request is transmitted from the outside of the data pool, then a "foreign" flag is added to the data insertion request, and the BE which is the first one receiving the request may perform the storing operation and subsequent polling and selecting operations, and add a "local" flag to the data insertion request when forwarding the data insertion request so as to indicate that the request is transmitted from a device in the data pool and that the polling and selecting operation has been performed, and a device in receipt of the request containing the "local" flag performs only a storage operation without performing the polling and selecting operation and the transmitting operation.

As illustrated in Fig.12, after operation S512, the present embodiment further includes the following operations S514 and S516 to be performed by a Back End device (BE) in the selected group.

Operation S514: The selected BE performs determination regarding the received data insertion request;

Operation S516: If it is determined that the data insertion request is forwarded from another BE in the data pool, then the data is stored directly onto the selected BE.

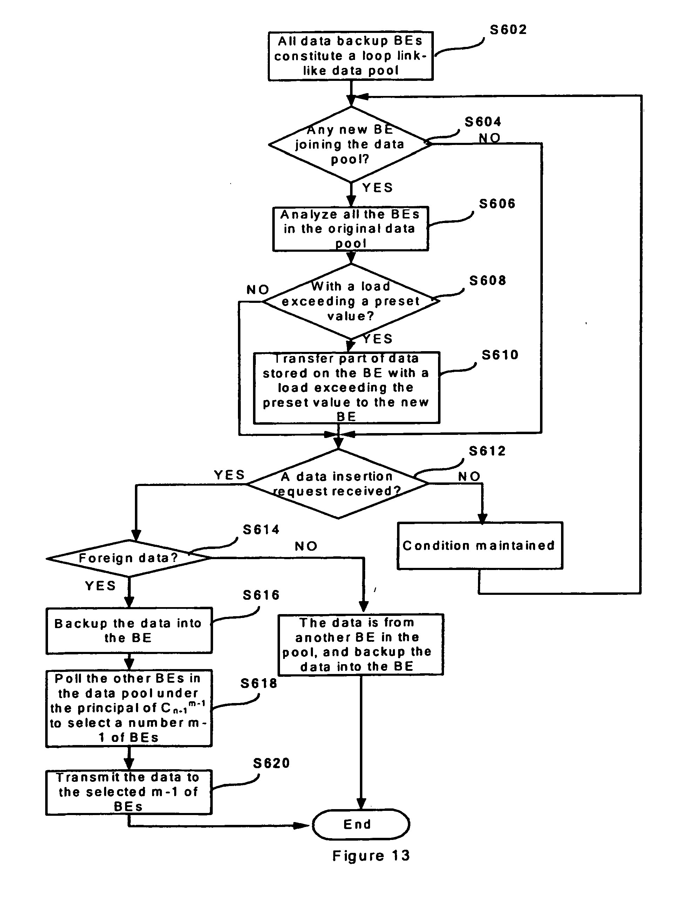

In the present embodiment, the polling to select one device for storage is taken as an example, that is, each data item is stored onto two devices in the data pool including the device which is the first one receiving the data insertion request and the other device which is selected via polling. Of course, if each data item is intended for storage onto three devices in the data pool, then selection is performed by Cₙ₋₁² through polling, and so on. For details thereof, reference may be made to the relevant descriptions of the embodiment in Fig.13. There is a number n-1 of combinations of Cₙ₋₁¹ in the present embodiment. A different device is selected for storage of a new data. Selection may be performed among the n-1 combinations of Cₙ₋₁¹ via polling and then a number n-1 of data items may be stored onto different n-1 devices respectively to thereby guarantee the principal of decentralized data storage to the maximum extent.

Reference is made to Fig.13 which is a flow chart of a further embodiment of the distributed data storage method. As illustrated in Fig.13, the present embodiment further includes operations to be performed when a node is joined and operations to be performed by each device in the data pool upon receipt of a data insertion request, and the present embodiment includes the following operations.

Operation S602: All the data storage BEs constitute a loop link data pool;

Operation S604: It is determined whether a new BE is added to the data pool, and if so, operation S606 is performed; otherwise, operation S612 is performed;

Operation 606: Load detection and analysis is performed on all the data storage BEs in the original data pool;

Operation S608: It is determined whether any BE in the original data pool is overloaded, that is, whether there is one or more BEs with a load exceeding a preset value, and if so, operation S610 is performed; otherwise, operation S612 is performed;

Operation 610: Part of data stored on the BE with a load exceeding the preset value is transferred onto the newly added BE;

Operation S612: Each storage device in the data pool determines whether a data insertion request has been received, and if not, it is maintained unchanged, and operation S604 is performed; otherwise, operation S614 is performed;

Operation S614: The device in receipt of a data insertion request determines whether it is the first time for the data pool to receive data in the data insertion request, that is, the data for storage is transmitted from the outside of the data pool, and if so, operation S616 is performed; otherwise, it is determined that the data is forwarded from another device in the data pool, and the data insertion request is from the other device (e.g., BE), so the data is simply stored onto the BE, and the flow ends;

Operation S616: The data is stored onto the local BE;

Operation 618: A group of m-1 backup devices for data storage are selected from the other n-1 BEs in the data pool under the principal of Cₙ₋₁^{m-1}, where n is the total number of all the devices;

S620: The data is transmitted to the selected m-1 BEs, and the flow ends.

The data storage operations are described in the present embodiment from the perspective of one BE unlike those in Fig.12. In Fig.12, the general descriptions of the operations of each of the nodes (the node refers to a Back End device node and thus means the same as a BE does) in the data pool including the first node which is the first node receiving the data insertion request and the selected nodes are shown. The present embodiment focuses on a Back End device node in the data pool, a general process flow of which is described, and the present embodiment further includes the operations for a joining device in which analysis and determination are further performed on each of the devices in the original data pool when a device newly joins the original data pool, and if an overload occurs, the portion of data overloading the device is transferred onto the newly joining device to further optimize the storage system and improve stability and disaster-tolerant feature of the system.

The portion of data overloading a device may be transferred onto the newly joining device particularly as follows: the portion of data beyond the preset load on a device with a load exceeding the preset load is stored onto the newly joining device and deleted from the overloaded device, where data stored onto the new device varies from one device with a load exceeding the preset load to another.

The advantageous effects of preventing a device from being overloaded, achieving high reliability of the device, etc., of the data storage method according to the invention have been described in the foregoing method embodiments of Figs.10 to 13, and the distributed data storage method also has high controllability as centralized data storage, which will be analyzed specifically as follows.

It is assumed that a number n (n is a natural number larger than one) of data storage devices constitute one loop link-like data pool and are referred to as a number n of nodes in the data pool, and data of a number n×X of users needs to be stored by storing two copies of the data of each user into the data pool, that is, a total number 2n×X of data items are stored on all the nodes. Each node is provided with its own inserted data, i.e., an assumed number X of data items received firstly by the node and stored in the node, and the inserted data of each node is subject to decentralized storage onto the other n-1 nodes and thus each node will store data of a number X/(n-1) of users from the other n-1 nodes, so that each node will be provided finally with data of a number ((X+(X/(n-1))×(n-1)) = 2X of users. For the K^{th} node, if data stored on this node is evenly decentralized onto the other n-1 nodes, then the access traffic on the K^{th} node will be taken over by the other n-1 nodes if the K^{th} node fails.

In the distributed data storage, the selection manner via polling is also adopted for data storage to ensure decentralized data storage as possible so that a number 2X of data items there are finally stored on each node, with the 2X data items including a number X of data items being subject to decentralized storage onto the other (n-1) nodes and the other X data items respectively stored on the other (n-1) nodes as illustrated in Fig.10. It is assumed that a number m of nodes in the data pool fail, and then:

3) the amount of lost user data is represented by C²ₘ×the amount of lost user data per couple of nodes = C²ₘ×(2X/(n-1)) = (m-1)×m×(X/(n-1)); and

4) the ratio of lost user data is represented by the amount of lost user data/the total amount of user data = ((X/(n-1))×(m-1)×m)/(n×X) = m×(m-1)/(n×(n-1)).

As can be apparent from the foregoing verification with calculation, the amount of lost user data due to some failing nodes may be determined and thus high controllability and well predictability may be achieved. In the prior art, clustered storage is adopted so that the amount of lost user data depends on the failing nodes and predictability is poor, and the foregoing method embodiments according to the invention may avoid an influence resulting from an incontrollable number of complaining users due to poor predictability in the prior art.

In the forgoing embodiments of the distributed data storage method, all the data storage devices constitute one data pool, that is, the storage devices in the pool are not further divided. Different data is stored through decentralized storage as possible onto different devices in the pool, so that the data is subject to evenly decentralized storage onto several devices in the data poll to thereby improve the resource utilization ratio. According to the invention, after a device fails, the data access traffic corresponding to the device is taken over by the plural device nodes in the pool to thereby achieve good disaster-tolerant feature and improve stability of the system. As have been verified for the invention, the ratio of data lost due to some failing storage devices may be determined and calculated, and therefore the foregoing technical solutions according to the invention have better controllability than those in the prior art, and may perform prediction after the failing of a device to avoid an influence resulting from poor predictability.

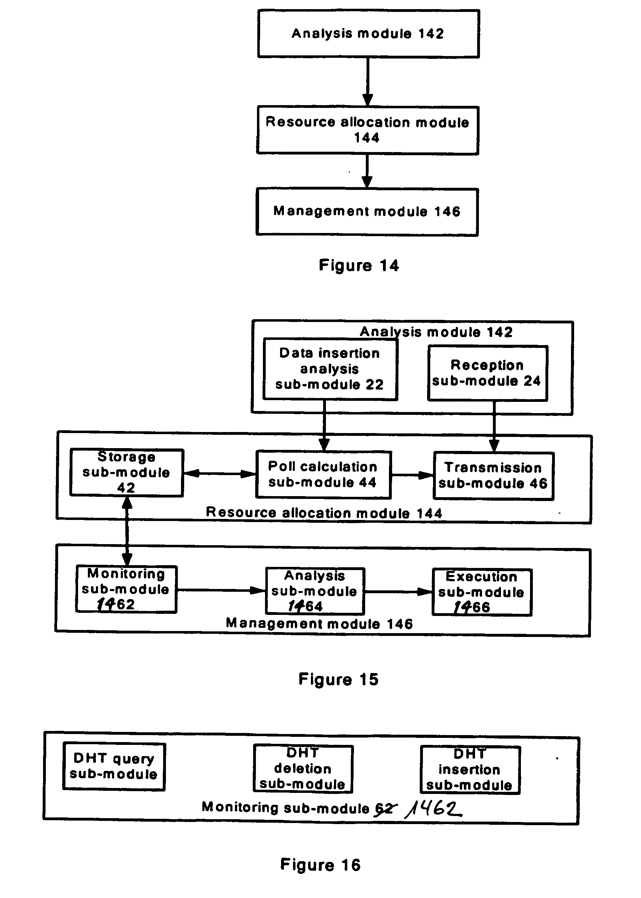

Reference is made to Fig.14 which is a schematic diagram of a first embodiment of a storage device according to the invention. As illustrated in Fig.14, the present embodiment includes:

an analysis module 142 configured to analyze a data insertion request;

a resource allocation module 144 connected with the analysis module 142 and configured to determine whether it is the first time for a data pool to receive the data insertion request, and if it is the first time for the data insertion request to be transmitted to the data pool, store data in the data insertion request onto the local device, poll the other devices in the data pool to select a number m-1 of devices, and transmit the data to each of the selected m-1 devices, where m is a natural number larger than one and smaller than the total number of all the devices in the data pool; otherwise, configured to simply store the data when it is determined that the data insertion request is forwarded from another device in the data pool; and

a management module 146 connected with the resource allocation module 144 and configured to manage each of the devices in the data pool composed of all the storage devices and resources information throughout the data pool.

In the present embodiment, the storage device selects the nodes for storage through the resource allocation module 144, manages the resources or loads in the data pool through the management module 146, to monitor the state of the entire data pool; and selects the storage devices from the data pool via polling upon receipt of data, thus addressing the problems that an existing storage device (e.g., BE) which fails causes an increased load on and instability of another device and that the existing storage device has a low resource utilization ratio, so as to achieve high reliability of each storage device and also improve the utilization ratio of the storage device.

Reference is made to Fig.15 which is a schematic diagram of a second embodiment of the storage device according to the invention. Fig.15 presents further details of the functional modules in the embodiment of Fig.14.

As illustrated in Fig.15, the analysis module 142 in the present embodiment includes: a data insertion analysis sub-module 22 configured to analyze the source of a data insertion request and trigger the resource allocation module 144 upon receipt of the data insertion request message; and a reception sub-module 24 connected with the data insertion analysis sub-module 22 and configured to receive the data insertion request message.

The resource allocation module 1444 includes: a storage sub-module 42 configured to store the total number n of all the devices in the data pool and the number m for selecting, and to store the data for insertion; a poll calculation sub-module 44 connected with the storage sub-module 42, and when the source of the data insertion request is the first time for the data pool to receive it, that is, the data insertion request is transmitted from the outside of the data pool, configured to select a number m-1 of other devices in the data pool than the device via polling under the principal of Cₙ₋₁^{m-1}; and a transmission sub-module 46 connected with the poll calculation sub-module 44 and configured to transmit the data respectively to the m-1 devices;

The management module includes: a monitoring sub-module 1462 configured to monitor all the other devices in the data pool, and upon receipt of a quit request from another device in the data pool and/or a join request from a new device to join the data pool, configured to update resources under management and to transmit the total number of all the updated devices to the storage sub-module 42; an analysis sub-module 1464 connected with the monitoring sub-module 1462, and upon receipt of a join request from a new device outside the data pool, configured to forward the join request of the new device to the other devices, and to analyze the loads of all the devices in the original data pool; and an execution sub-module 1466 connected with the analysis sub-module 1464, and when there is at least one of the devices in the original data pool with a load exceeding a preset value, configured to transfer part of data stored on the device with a load exceeding the preset value onto the new device.

In the embodiment of Fig.15, the analysis module 142 primarily processes the data insertion request, and the management module 146 manages and updates information of registration, quit, etc., of the storage devices corresponding to the respective nodes in the data pool and monitors all the time a condition throughout the data pool to facilitate decentralized storage of data upon receipt of the data for storage. The embodiments in Figs. 14 and 15 have similar functions to those in the method embodiments of Figs. 10 to 13, and for details thereof, reference may be made to the introductions of the principal and technical solutions regarding the method embodiments, and repeated descriptions thereof will be omitted here.

Fig.16 is a schematic diagram of the structure of an embodiment of the monitoring sub-module 1462 in Fig.15. As illustrated in Fig.16, the monitoring sub-module 1462 in the present embodiment includes a Distributed Hash Table (DHT) query sub-module configured to perform a data query on the other devices in the data pool; a DHT insertion sub-module configured to insert data onto the other devices in the data pool; and a DHT deletion sub-module configured to delete data from the other devices in the data pool. Each of the modules illustrated in Fig.16 is connected with the analysis sub-module 1464 in the management module 146. The DHT is a distributed keyword query technology, and in the present embodiment, each of the nodes in the data pool, i.e., back end devices (BE) may exchange link loop information through the DHT to facilitate dynamic and timely acquisition of information throughout the data pool, for example, a query about the data source of a data insertion request, joining or quitting of a node in the data pool, etc. For details of a DHT related query, deletion, etc., and a DHT loop link, reference may be made to the relevant Chinese Patent Application No. 200710118600.8, and repeated descriptions thereof will be omitted here.

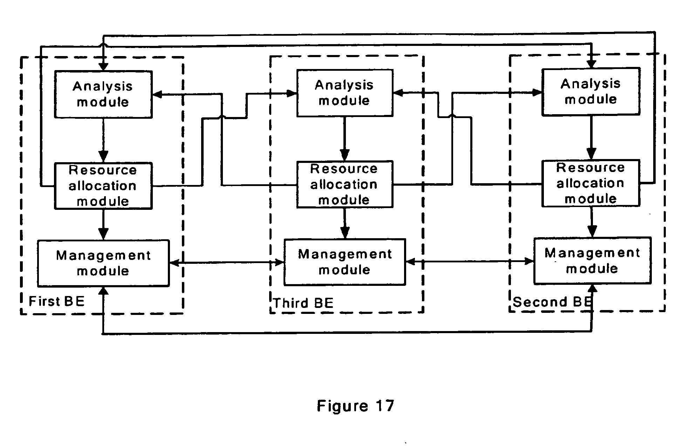

Fig.17 is a schematic diagram of another embodiment of the distributed data storage system according to the invention. As illustrated in Fig.17, the present embodiment includes three data storage devices, i.e., a first BE, a second BE and a third BE, of which a data pool is composed, and for details of the first BE, the second BE and the third BE in the present embodiment, reference may be made to the descriptions of the storage devices in the embodiments of Figs.14 to 16, and repeated descriptions thereof will be omitted here. The resource allocation module of each BE is connected with the analysis modules of the other BEs, and the management modules of the modules are interconnected. As illustrated in Fig.l7, the resource allocation module of the first BE is connected with the analysis modules of the second and third BEs, and the management module of the first BE is connected with the management modules of the second and third BEs. As illustrated in Fig.15 or 16, the monitoring sub-modules in the management modules of the BEs may transmit a quit or join request and is in mutual status communication with the other BEs after joining or quitting the data pool.

The data storage system according to the present embodiment can address the problems that a failing node causes an increased load on and instability of another node and that each node in the existing data storage system has a low utilization ratio and poor predictability of a loss amount with respect to data storage in an existing clustered storage system, so as to achieve high reliability of the storage system despite any failing node and also improve the resource utilization ratio and predictability throughout the system.

There are various possible forms of embodiments for the invention, and the foregoing illustrative descriptions of the technical solutions according to the invention taking Figs.2 to 17 as examples shall not mean that the embodiments applicable to the invention will be limited to only the specific flows and structures. Those ordinarily skilled in the art shall appreciate that the particular implementations presented as above are merely a few examples of various preferred applications and any technical solution in which all the devices constitute a data pool and different data is subject to decentralized storage onto different nodes in the data pool shall be encompassed in the claimed scope of the technical solutions of the invention.

Lastly it shall be noted that the foregoing embodiments are merely intended to illustrate but not to limit the technical solutions of the invention; and although the invention has been detailed with reference to the foregoing embodiments thereof, those ordinarily skilled in the art shall appreciate that they still may modify the technical solutions recited in the foregoing embodiments or substitute equivalently part of the technical features therein without departing from the scope of the technical solutions in the embodiments of the invention.

## Claims

1. A data storage method, comprising:
constituting a data pool by all of n data storage devices;
when there is data for storage, polling all the devices in the data pool to select a group of m devices, and storing the data into each of the selected group of m devices, where m is larger than one and smaller than n;
**characterized by** the method further comprising:
detecting the loads of all the data storage devices in the original data pool when a new device joins or quits the data pool;
upon detection of at least one of the devices in the original data pool with a load exceeding a preset value, and upon receipt of a join request to join the data pool from a new device transferring part of data stored on the device with a load exceeding the preset value to the new device.

2. The method according to claim 1, wherein, polling all the devices in the data pool to select the group of m devices and storing the data into each of the selected group of m devices comprise:
when the device in receipt of a data insertion request corresponding to the data detects that the data insertion request is from the outside of the data pool, storing the data, polling the other devices in the data pool to select a number m-1 of devices, and storing the data into each of the selected m-1 devices.

3. The method according to claim 1 or 2, wherein, polling in the data pool to select a number of devices under the drawer principal.

4. A management server, comprising:
a determination module (62) configured to determine whether there is data for storage;
**characterized by**
a resource allocation module (64) connected with the determination module (62), and configured to poll, when there is data for storage, in a data pool composed of all of n data storage devices to select a group of m devices and transmit the data to each of the m devices, where m is larger than one and smaller than n; and
a management module (66) connected with the resource allocation module (64) and configured to manage both all the devices and device resources in the data pool,
wherein the management module (66) comprises:
a monitoring sub-module (662) configured to monitor all the devices in the data pool, and upon receipt of a quit request from one of the devices in the data pool and/or a join request from a new device to join the data pool, update devices resources in the data pool under management and transmit the total number of all the updated devices to the resource allocation module (64);
an analysis sub-module (664) connected with the monitoring sub-module (662), and configured to transmit, upon receipt of a join request to join the data pool from a new device, load query request to all the devices in the original data pool, and analyze load information returned from all the devices; and
an execution sub-module (666) connected with the analysis sub-module (664), and configured to transfer, when there is at least one of the devices in the original data pool with a load exceeding a preset value, part of data stored on the device with a load exceeding the preset value onto the new device.

5. The management server according to claim 4, wherein, the determination module (62) comprises:
a data insertion sub-module (621) configured to trigger the resource allocation module (64) upon receipt of a data insertion request message; and
a reception sub-module (622) connected with the data insertion sub-module (621) and configured to receive the data insertion request and corresponding data for storage.

6. The management server according to claim 4 or 5, wherein, the resource allocation module (64) comprises:
a storage sub-module (642) configured to store the total number n of all the devices in the data pool and the number m of selected devices;
a poll calculation sub-module (644) connected with the storage sub-module and configured to select a group of m devices via polling under the principal of Cₙ^{m}; and
a transmission sub-module (646) connected with the poll calculation sub-module (644) and configured to transmit the data for storage to each of the m devices.

7. A data storage system comprising a management server according to claim 4, further comprising a plurality of data storage devices (101, 102, 103, 104) all of which are connected with and managed centrally by the management server.

8. The data storage system according to claim 7, wherein, each of the data storage devices (101, 102, 103, 104) comprises:
a data insertion module (11) configured to receive data for insertion transmitted from the management server;
a storage module (13) connected with the data insertion module (11) and configured to store the data for insertion and to calculate the load on the device; and
a detection module (12) connected with the storage module (13), and configured to transmit, when the device quits or joins the data pool, a quit or join request to the management server; the detection module (12) is in mutual status communication with the management server after joining the data pool, and returns current load information of the device upon receipt of a device load query request from the management server.

9. A storage device, comprising:
an analysis module (142) configured to analyze a data insertion request;
**characterized by**
a resource allocation module (144) connected with the analysis module (142), and when it is the first time for a data pool to which the device belongs to receive the data insertion request, the resource allocation module (144) stores data corresponding to the data insertion request, polls the other devices in the data pool to select a number m-1 of devices, and transmits the data to each of the selected m-1 devices, where m is a natural number larger than one and smaller than the total number of all the devices in the data pool; and when the data for insertion is forwarded from another device in the data pool, the resource allocation module (144) merely stores the data corresponding to the data insertion request; and
a management module (146) connected with the resource allocation module (144) and configured to manage both the devices in the data pool composed of all the storage devices and resources information throughout the data pool,
wherein the management module (146) comprises:
a monitoring sub-module (1462) configured to monitor all the other devices in the data pool, and upon receipt of a quit request from another device in the data pool and/or a join request from a new device to join the data pool, update resources under management and send the total number of the devices in the updated data pool to the resource allocation module (144);
an analysis sub-module (1464) connected with the monitoring sub-module (1462), and configured to forward, upon receipt of the join request from a new device outside the data pool, the join request of the new device to the other devices, and to analyze the loads of all the devices in the original data pool; and
an execution sub-module (1466) connected with the analysis sub-module (1464), and configured to transfer, when at least one of the devices in the original data pool has a load exceeding a preset value, part of data stored on the device with a load exceeding the preset value to the new device.

10. The storage device according to claim 9, wherein, the analysis module (142) comprises:
a data insertion analysis sub-module (22) configured to determine, upon receipt of the data insertion request message, whether the data insertion request is received at the data pool for the first time or forwarded from another device in the data pool and trigger the resource allocation module (144); and
a reception sub-module (24) connected with the data insertion sub-module (22) and configured to receive the data insertion request.

11. The storage device according to claim 9 or 10, wherein, the resource allocation module (144) comprises:
a storage sub-module (42) configured to store the total number n of all the devices in the data pool and the number m of selected devices, and to store the data for insertion;
a poll calculation sub-module (44) connected with the storage sub-module (42), and when the data insertion request is from the outside of the data pool, the poll calculation sub-module (44) selects a number m-1 of other devices in the data pool via polling under the principal of Cₙ₋₁^{m-1}; and
a transmission sub-module (46) connected with the poll calculation sub-module (44) and configured to transmit the data to each of the m-1 devices.

12. The storage device according to claim 9, wherein, the monitoring sub-module (1462) comprises:
a distributed hash table query sub-module connected with the analysis sub-module and configured to query data of the other devices in the data pool;
a distributed hash table insertion sub-module connected with the analysis sub-module and configured to insert data to the other devices in the data pool; and
a distributed hash table deletion sub-module connected with the analysis sub-module and configured to delete data from the other devices in the data pool.

13. A data storage system comprising a plurality of storage devices according to claim 9, the plurality of storage devices constituting a data pool; and
any one of the storage devices has both the resource allocation module connected with the analysis modules of the other storage devices and the management module connected with the management modules of the other storage devices.

## Patentansprüche

1. Verfahren zur Speicherung von Daten, das umfasst, dass:
aus allen von n Datenspeichervorrichtungen ein Datenpool gebildet wird;
dann, wenn es Daten zum Speichern gibt, alle Vorrichtungen im Datenpool abgefragt werden, um eine Gruppe von m Vorrichtungen zu wählen und die Daten in jeder Vorrichtung der gewählten Gruppe von m Vorrichtungen gespeichert werden, wobei m größer als Eins und kleiner als n ist;
**dadurch gekennzeichnet , dass** das Verfahren ferner umfasst, dass:
die Belastungen aller Datenspeichervorrichtungen im ursprünglichen Datenpool detektiert werden, wenn eine neue Vorrichtung dem Datenpool beitritt oder aus diesem austritt;
auf die Detektion hin, dass mindestens eine der Vorrichtungen im ursprünglichen Datenpool eine Belastung aufweist, die einen voreingestellten Wert überschreitet, und auf den Empfang einer Beitrittsanforderung zum Beitritt in den Datenpool von einer neuen Vorrichtung hin, ein Teil der Daten, die in der Vorrichtung gespeichert sind, deren Belastung den voreingestellten Wert überschreitet, an die neue Vorrichtung übertragen wird.

2. Verfahren nach Anspruch 1,
wobei das Abfragen aller Vorrichtungen im Datenpool, um die Gruppe von m Vorrichtungen zu wählen und die Daten in jeder Vorrichtung der gewählten Gruppe von m Vorrichtungen zu speichern, umfasst, dass:
wenn die Vorrichtung, die eine Dateneinfügeanforderung empfangen hat, welche den Daten entspricht, detektiert, dass die Dateneinfügeanforderung von außerhalb des Datenpools kommt, die Daten gespeichert werden, die anderen Vorrichtungen im Datenpool abgefragt werden, um eine Anzahl m-1 Vorrichtungen zu wählen, und die Daten in jeder der gewählten m-1 Vorrichtungen gespeichert werden.

3. Verfahren nach Anspruch 1 oder 2,
wobei der Datenpool abgefragt wird, um eine Anzahl Vorrichtungen mit dem Schubladenprinzip zu wählen.

4. Managementserver, der umfasst:
ein Bestimmungsmodul (62), das ausgestaltet ist, um festzustellen, ob es Daten zur Speicherung gibt;
**gekennzeichnet durch**
ein Ressourcenzuteilungsmodul (64), das mit dem Bestimmungsmodul (62) verbunden ist und ausgestaltet ist, um dann, wenn es Daten zur Speicherung gibt, einen Datenpool abzufragen, der aus allen von n Datenspeichervorrichtungen besteht, um eine Gruppe von m Vorrichtungen zu wählen und die Daten an jede der m Vorrichtungen zu übertragen, wobei m größer als Eins und kleiner als n ist; und
ein Managementmodul (66), das mit dem Ressourcenzuteilungsmodul (64) verbunden ist und ausgestaltet ist, um sowohl alle Vorrichtungen als auch alle Vorrichtungsressourcen im Datenpool zu managen, wobei das Managementmodul (66) umfasst:
ein Überwachungsteilmodul (662), das ausgestaltet ist, um alle Vorrichtungen im Datenpool zu überwachen, und um auf den Empfang einer Austrittsanforderung von einer der Vorrichtungen im Datenpool und/oder einer Beitrittsanforderung von einer neuen Vorrichtung, um dem Datenpool beizutreten, Vorrichtungsressourcen im gemanagten Datenpool zu aktualisieren und die Gesamtanzahl aller aktualisierten Vorrichtungen an das Ressourcenzuteilungsmodul (64) zu übertragen;
ein Analyseteilmodul (664), das mit dem Überwachungsteilmodul (662) verbunden ist und ausgestaltet ist, um auf den Empfang einer Beitrittsanforderung von einer neuen Vorrichtung, um dem Datenpool beizutreten, eine Belastungsabfrageanforderung an alle Vorrichtungen im ursprünglichen Datenpool zu übertragen, und um Belastungsinformationen zu analysieren, die von allen Vorrichtungen zurückgegeben werden; und
ein Ausführungsteilmodul (666), das mit dem Analyseteilmodul (664) verbunden ist und ausgestaltet ist, um dann, wenn es mindestens eine Vorrichtung im ursprünglichen Datenpool mit einer Belastung gibt, die einen voreingestellten Wert überschreitet, einen Teil der Daten, die in der Vorrichtung gespeichert sind, deren Belastung den voreingestellten Wert überschreitet, an die neue Vorrichtung zu übertragen.

5. Managementserver nach Anspruch 4, wobei das Bestimmungsmodul (62) umfasst:
ein Dateneinfügeteilmodul (621), das ausgestaltet ist, um das Ressourcenzuteilungsmodul (64) auf den Empfang einer Dateneinfügeanforderungsmeldung hin auszulösen; und
ein Empfangsteilmodul (622), das mit dem Dateneinfügeteilmodul (621) verbunden ist und ausgestaltet ist, um die Dateneinfügeanforderung und zugehörige Daten zur Speicherung zu empfangen.

6. Managementserver nach Anspruch 4 oder 5, wobei das Ressourcenzuteilungsmodul (64) umfasst:
ein Speicherteilmodul (642), das ausgestaltet ist, um die Gesamtanzahl n aller Vorrichtungen im Datenpool und die Anzahl m der gewählten Vorrichtungen zu speichern;
ein Abfrageberechnungsteilmodul (644), das mit dem Speicherteilmodul verbunden ist und ausgestaltet ist, um eine Gruppe von m Vorrichtungen mit Hilfe von Abfragen mit dem Prinzip Cₙ^{m} zu wählen; und
ein Übertragungsteilmodul (646), das mit dem Abfrageberechnungsteilmodul (644) verbunden ist und ausgestaltet ist, um die Daten zur Speicherung an jede der m Vorrichtungen zu übertragen.

7. Datenspeichersystem, das einen Managementserver nach Anspruch 4 umfasst, welches ferner eine Vielzahl von Datenspeichervorrichtungen (101, 102, 103, 104) umfasst, welche alle mit dem Managementserver verbunden sind und von diesem zentral gemanagt werden.

8. Datenspeichersystem nach Anspruch 7,
wobei jede der Datenspeichervorrichtungen (101, 102, 103, 104) umfasst:
ein Dateneinfügemodul (11), das ausgestaltet ist, um Daten zum Einfügen zu empfangen, die vom Managementserver übertragen werden;
ein Speichermodul (13), das mit dem Dateneinfügemodul (11) verbunden ist und ausgestaltet ist, um die Daten zum Einfügen zu speichern und um die Belastung an der Vorrichtung zu berechnen; und
ein Detektionsmodul (12), das mit dem Speichermodul (13) verbunden ist und ausgestaltet ist, um dann, wenn die Vorrichtung aus dem Datenpool austritt oder diesem beitritt, eine Austritts- oder Beitrittsanforderung an den Managementserver zu übertragen; wobei das Detektionsmodul (12) in einer wechselseitigen Statuskommunikation mit dem Managementserver nach dem Beitritt zum Datenpool steht und aktuelle Belastungsinformationen der Vorrichtung auf den Empfang einer Vorrichtungsbelastungsabfrageanforderung vom Managementserver hin zurückgibt.

9. Speichervorrichtung, umfassend:
ein Analysemodul (142), das ausgestaltet ist, um eine Dateneinfügeanforderung zu analysieren;
**gekennzeichnet durch**
ein Ressourcenzuteilungsmodul (144), das mit dem Analysemodul (142) verbunden ist, und wobei das Ressourcenzuteilungsmodul (144) dann, wenn es für den Datenpool, zu dem die Vorrichtung gehört, das erste Mal ist, dass die Dateneinfügeanforderung empfangen wird, Daten speichert, die der Dateneinfügeanforderung entsprechen, die anderen Vorrichtungen im Datenpool abfragt, um eine Anzahl m-1 Vorrichtungen zu wählen, und die Daten an jede der gewählten m-1 Vorrichtungen überträgt, wobei m eine natürliche Zahl größer als Eins und kleiner als die Gesamtanzahl aller Vorrichtungen im Datenpool ist; und wobei das Ressourcenzuteilungsmodul (144) dann, wenn die Daten zum Einfügen von einer anderen Vorrichtung im Datenpool weitergeleitet werden, nur die Daten speichert, die der Dateneinfügeanforderung entsprechen; und
ein Managementmodul (146), das mit dem Ressourcenzuteilungsmodul (144) verbunden ist und ausgestaltet ist, um sowohl die Vorrichtungen im Datenpool, der aus allen Speichervorrichtungen besteht, als auch Ressourceninformationen über den gesamten Datenpool hinweg zu managen,
wobei das Managementmodul (146) umfasst:
ein Überwachungsteilmodul (1462), das ausgestaltet ist, um alle anderen Vorrichtungen im Datenpool zu überwachen, und um auf den Empfang einer Austrittsanforderung von einer anderen Vorrichtung im Datenpool und/oder einer Beitrittsanforderung von einer neuen Vorrichtung, um dem Datenpool beizutreten, hin Ressourcen, die gemanagt werden, zu aktualisieren und die Gesamtanzahl der Vorrichtungen im aktualisierten Datenpool an das Ressourcenzuteilungsmodul (144) zu senden;
ein Analyseteilmodul (1464), das mit dem Überwachungsteilmodul (1462) verbunden ist und ausgestaltet ist, um auf den Empfang der Beitrittsanforderung von einer neuen Vorrichtung außerhalb des Datenpools hin die Beitrittsanforderung der neuen Vorrichtung an die anderen Vorrichtungen weiterzuleiten und die Belastungen aller Vorrichtungen im ursprünglichen Datenpool zu analysieren; und
ein Ausführungsteilmodul (1466), das mit dem Analyseteilmodul (1464) verbunden ist und ausgestaltet ist, um dann, wenn mindestens eine der Vorrichtungen im ursprünglichen Datenpool eine Belastung aufweist, die einen voreingestellten Wert überschreitet, einen Teil der Daten, die in der Vorrichtung gespeichert sind, die eine Last aufweist, welche den voreingestellten Wert überschreitet, an die neue Vorrichtung zu übertragen.

10. Speichervorrichtung nach Anspruch 9, wobei das Analysemodul (142) umfasst:
ein Dateneinfügeanalyseteilmodul (22), das ausgestaltet ist, um auf den Empfang der Dateneinfügeanforderungsmeldung hin festzustellen, ob die Dateneinfügeanforderung am Datenpool zum ersten Mal empfangen wurde oder von einer anderen Vorrichtung im Datenpool weitergeleitet wurde, und um das Ressourcenzuteilungsmodul (144) auszulösen; und
ein Empfangsteilmodul (24), das mit dem Dateneinfügeteilmodul (22) verbunden ist und ausgestaltet ist, um die Dateneinfügeanforderung zu empfangen.

11. Speichervorrichtung nach Anspruch 9 oder 10, wobei das Ressourcenzuteilungsmodul (144) umfasst:
ein Speicherteilmodul (42), das ausgestaltet ist, um die Gesamtanzahl n aller Vorrichtungen im Datenpool und die Anzahl m der gewählten Vorrichtungen zu speichern, und um die einzufügenden Daten zu speichern;
ein Abfrageberechnungsteilmodul (44), das mit dem Speicherteilmodul (42) verbunden ist und wobei das Abfrageberechnungsteilmodul (44) dann, wenn die Dateneinfügeanforderung von außerhalb des Datenpools kommt, eine Anzahl m-1 anderer Vorrichtungen im Datenpool über eine Abfrage nach dem Prinzip Cₙ₋₁^{m-1} wählt; und
ein Übertragungsteilmodul (46), das mit dem Abfrageberechnungsteilmodul (44) verbunden ist und ausgestaltet ist, um die Daten an jede der m-1 Vorrichtungen zu übertragen.

12. Speichervorrichtung nach Anspruch 9, wobei das Überwachungsteilmodul (1462) umfasst:
ein Anfrageteilmodul mit einer verteilten Hash-Tabelle, das mit dem Analyseteilmodul verbunden ist und ausgestaltet ist, um Daten der anderen Vorrichtungen im Datenpool anzufragen;
ein Einfügeteilmodul mit einer verteilten Hash-Tabelle, das mit dem Analyseteilmodul verbunden ist und ausgestaltet ist, um Daten in die anderen Vorrichtungen im Datenpool einzufügen; und
ein Löschteilmodul mit einer verteilten Hash-Tabelle, das mit dem Analyseteilmodul verbunden ist und ausgestaltet ist, um Daten von den anderen Vorrichtungen im Datenpool zu löschen.

13. Datenspeichersystem, das eine Vielzahl von Speichervorrichtungen nach Anspruch 9 umfasst, wobei die Vielzahl von Speichervorrichtungen einen Datenpool bildet; und
wobei eine beliebige der Speichervorrichtungen sowohl das Ressourcenzuteilungsmodul, das mit den Analysemodulen der anderen Speichervorrichtungen verbunden ist, als auch das Managementmodul, das mit den Managementmodulen der anderen Speichervorrichtungen verbunden ist, aufweist.

## Revendications

1. Procédé de stockage de données, comprenant :
la constitution d'un fonds de données par tous les n dispositifs de stockage de données ;
lorsqu'il existe des données pour le stockage, l'interrogation de tous les dispositifs dans le fonds de données pour sélectionner un groupe de m dispositifs, et stocker les données dans chacun des groupes sélectionnés de m dispositifs, où m est supérieur à 1 et inférieur à n ;
**caractérisé en ce que** le procédé comprend en outre les étapes consistant à :
détecter les charges de tous les dispositifs de stockage de données dans le fonds de données d'origine quand un nouveau dispositif rejoint ou quitte le fonds de données ;
lors de la détection de l'un au moins des dispositifs dans le fonds de données d'origine avec une charge qui excède une valeur préétablie et lors de la réception d'une requête pour rejoindre le fonds de données depuis un nouveau dispositif, transférer une partie des données stockées sur le dispositif avec une charge qui excède la valeur préétablie vers le nouveau dispositif.

2. Procédé selon la revendication 1, dans lequel l'interrogation de tous les dispositifs dans le fonds de données pour sélectionner le groupe de m dispositifs et stocker les données dans chacun des groupes sélectionnés de m dispositifs comprend :
quand le dispositif qui reçoit une requête d'introduction de données correspondant aux données détecte que la requête d'introduction de données provient de l'extérieur du fonds de données, le stockage des données, l'interrogation des autres dispositifs dans le fonds de données pour sélectionner un nombre m-1 de dispositifs, et le stockage des données dans chacun des m-1 dispositifs sélectionnés.

3. Procédé selon la revendication 1 ou 2, dans lequel on procède à l'interrogation dans le fonds de données pour sélectionner un nombre de dispositifs sous le principe des tiroirs.

4. Serveur de gestion, comprenant :
un module de détermination (62) configuré pour déterminer s'il existe des données pour le stockage ;
**caractérisé par**
un module d'affectation de ressources (64) connecté avec le module de détermination (62), et configuré pour interroger, lorsqu'il existe des données pour le stockage, dans un fonds de données composé de tous les n dispositifs de stockage de données pour sélectionner un groupe de m dispositifs et transmettre les données à chacun des m dispositifs, tel que m est supérieur à 1 et inférieur à n ; et
un module de gestion (66) connecté au module d'affectation de ressources (64) et configuré pour gérer à la fois tous les dispositifs et toutes les ressources de dispositifs dans le fonds de données,
dans lequel le module de gestion (66) comprend :
un sous-module de surveillance (662) configuré pour surveiller tous les dispositifs dans le fonds de données et, lors de la réception d'une requête visant à quitter provenant de l'un des dispositifs dans le fonds de données et/ou une requête visant à rejoindre provenant d'un nouveau dispositif pour rejoindre le fonds de données, pour mettre à jour les ressources de dispositifs dans le fonds de données en gestion, et transmettre le nombre total de tous les dispositifs mis à jour au module d'affectation de ressources (64) ;
un sous-module d'analyse (664) connecté au sous-module de surveillance (662) et configuré pour transmettre, lors de la réception d'une requête visant à rejoindre le fonds de données provenant d'un nouveau dispositif, charger une requête de recherche à tous les dispositifs dans le fonds de données d'origine, et analyser les informations de charge retournées depuis tous les dispositifs ; et
un sous-module d'exécution (666) connecté au sous-module d'analyse (664) et configuré pour transférer, lorsqu'il existe au moins un des dispositifs dans le fonds de données d'origine avec une charge excédant une valeur préétablie, une partie des données stockées sur le dispositif avec une charge excédant la valeur préétablie vers le nouveau dispositif.

5. Serveur de gestion selon la revendication 4 dans lequel le module de détermination (62) comprend :
un sous-module d'introduction de données (621) configuré pour déclencher le module d'affectation de ressources (64) lors de la réception d'un message de requête d'introduction de données ; et
un sous-module de réception (622) connecté au sous-module d'introduction de données (621) et configuré pour recevoir la requête d'introduction de données et les données correspondantes pour leur stockage.

6. Serveur de gestion selon la revendication 4 ou 5 dans lequel le module d'affectation de ressources (64) comprend :
un sous-module de stockage (642) configuré pour stocker le nombre total n de tous les dispositifs dans le fonds de données et le nombre m de dispositifs sélectionnés ;
un sous-module de calcul d'interrogation (644) connecté au sous-module de stockage et configuré pour sélectionner un groupe de m dispositifs via une interrogation sous le principe de C^{m}ₙ ; et
un sous-module de transmission (646) connecté au sous-module de calcul d'interrogation (644) et configuré pour transmettre les données pour leur stockage à chacun des m dispositifs.

7. Système de stockage de données comprenant un serveur de gestion selon la revendication 4, comprenant en outre une pluralité de dispositifs de stockage de données (101, 102, 103, 104) qui sont tous connectés au serveur de gestion et gérés de manière centrale par celui-ci.

8. Système de stockage de données selon la revendication 7, dans lequel chacun des dispositifs de stockage de données (101, 102, 103, 104) comprend :
un module d'introduction de données (11) configuré pour recevoir des données à introduire, transmises depuis le serveur de gestion ;
un module de stockage (13) connecté au module d'introduction de données (11) et configuré pour stocker les données à introduire et pour calculer la charge sur le dispositif ; et
un module de détection (12) connecté au module de stockage (13), et
configuré pour transmettre, quand le dispositif quitte ou rejoint le fonds de données, une requête pour quitter ou pour rejoindre au serveur de gestion, le module de détection (12) étant en état de communication mutuelle avec le serveur de gestion après avoir rejoint le fonds de données, et renvoie des informations de charge actuelle du dispositif lors de la réception d'une requête de charge de dispositif depuis le serveur de gestion.

9. Dispositif de stockage, comprenant :
un module d'analyse (142) configuré pour analyser une requête d'introduction de données ;
**caractérisé par**
un module d'affectation de ressources (144) connecté au module d'analyse (142) tel que, lorsque c'est la première fois qu'un fonds de données auquel appartient le dispositif reçoit la requête d'introduction de données, le module d'affectation de ressources (144) stocke les données correspondant à la requête d'introduction de données, interroge les autres dispositifs dans le fonds de données pour sélectionner un nombre m-1 de dispositifs, et transmet les données à chacun des m-1 dispositifs sélectionnés, où m est un nombre naturel supérieur à 1 et
inférieur au nombre total de tous les dispositifs dans le fonds de données ; et quand les données à introduire sont amenées depuis un autre dispositif dans le fonds de données, le module d'affectation de ressources (144) stocke simplement les données correspondant à la requête d'introduction de données ; et
un module de gestion (146) connecté au module d'affectation de ressources (144) et configuré pour gérer à la fois les dispositifs dans le fonds de données composé de tous les dispositifs de stockage et les informations de ressources à travers tout le fonds de données,
dans lequel le module de gestion (146) comprend :
un sous-module de surveillance (1462) configuré pour surveiller tous les autres dispositifs dans le fonds de données et, lors de la réception d'une requête visant à quitter, provenant d'un autre dispositif dans le fonds de données et/ou d'une requête visant à rejoindre, provenant d'un nouveau dispositif pour rejoindre le fonds de données, pour mettre à jour les ressources en cours de gestion, et pour envoyer le nombre total des dispositifs dans le fonds de données mis à jour au module d'affectation de ressources (144) ;
un sous-module d'analyse (1464) connecté au sous-module de surveillance (1462), et configuré pour envoyer, lors de la réception de la requête visant à rejoindre provenant d'un nouveau dispositif extérieur au fonds de données, la requête visant à joindre provenant du nouveau dispositif vers les autres dispositifs, et pour analyser les charges de tous les dispositifs dans le fonds de données d'origine ; et
un sous-module d'exécution (1466) connecté au sous-module d'analyse (1464) et configuré pour transférer, quand au moins un des dispositifs dans le fonds de données d'origine présente une charge qui excède une valeur préétablie, une partie des données stockées sur le dispositif avec une charge qui excède la valeur préétablie vers le nouveau dispositif.

10. Dispositif de stockage selon la revendication 9 dans lequel le module d'analyse (142) comprend :
un sous-module d'analyse d'introduction de données (22) configuré pour déterminer, lors de la réception du message de requête d'introduction de données, si la requête d'introduction de données est reçue au fonds de données pour la première fois ou si elle est envoyée depuis un autre dispositif dans le fonds de données, et pour déclencher le module d'affectation de ressources (144) ; et
un sous-module de réception (24) connecté avec le sous-module d'introduction de données (22) et configuré pour recevoir la requête d'introduction de données.

11. Dispositif de stockage selon la revendication 9 ou 10 dans lequel le module d'affectation de ressources (144) comprend :
un sous-module de stockage (42) configuré pour stocker le nombre total n de tous les dispositifs dans le fonds de données et le nombre m de dispositifs sélectionnés, et pour stocker les données pour leur introduction ;
un sous-module de calcul d'interrogation (44) connecté avec le sous-module de stockage (42) et, quand la requête d'introduction de données provient depuis l'extérieur du fonds de données, le sous-module de calcul d'interrogation (44) sélectionne un nombre m-1 d'autres dispositifs dans le fonds de données via une interrogation selon le principe de Cₙ₋₁^{m-1} ; et
un sous-module de transmission (46) connecté au sous-module de calcul d'interrogation (44) et configuré pour transmettre les données à chacun des m-1 dispositifs.

12. Dispositif de stockage selon la revendication 9 dans lequel le sous-module de surveillance (1462) comprend :
un sous-module de recherche de tableau de compression "hash" distribué connecté au sous-module d'analyse et configuré pour rechercher des données des autres dispositifs dans le fonds de données ;
un sous-module d'introduction de tableau de compression "hash" distribué connecté au sous-module d'analyse et configuré pour introduire des données vers les autres dispositifs dans le fonds de données ; et
un sous-module d'effacement de tableau de compression "hash" distribué connecté au sous-module d'analyse et configuré pour effacer les données depuis les autres dispositifs dans le fonds de données.

13. Système de stockage de données comprenant une pluralité de dispositifs de stockage selon la revendication 9, la pluralité de dispositifs de stockage constituant un fonds de données ; et
l'un quelconque des dispositifs de stockage comprend à la fois le module d'affectation de ressources connecté avec les modules d'analyse des autres dispositifs de stockage, et le module de gestion connecté avec les modules de gestion des autres dispositifs de stockage
